Europäisches Patentamt

European Patent Office

Office européen des brevets

(11) Veröffentlichungsnummer: **0 228 132 B1**

(12) **EUROPÄISCHE PATENTSCHRIFT**

(45) Veröffentlichungstag der Patentschrift: **05.08.92**

(21) Anmeldenummer: **86202288.6**

(22) Anmeldetag: **16.12.86**

(51) Int. Cl.⁵: **G02B 6/44**, B29D 11/00

(54) Verfahren zur Herstellung eines optischen Kabels.

(30) Priorität: **21.12.85 DE 3545662**

(43) Veröffentlichungstag der Anmeldung:
**08.07.87 Patentblatt 87/28**

(45) Bekanntmachung des Hinweises auf die
Patenterteilung:
**05.08.92 Patentblatt 92/32**

(84) Benannte Vertragsstaaten:
**DE FR GB IT NL**

(56) Entgegenhaltungen:
DE-A- 2 641 166      DE-A- 3 320 072
FR-A- 2 260 806      FR-A- 2 305 748
FR-A- 2 342 508      US-A- 4 241 979

(73) Patentinhaber: **Philips Patentverwaltung
GmbH
Wendenstrasse 35 Postfach 10 51 49
W-2000 Hamburg 1(DE)**

(84) Benannte Vertragsstaaten:
**DE**

(73) Patentinhaber: **N.V. Philips' Gloeilampenfabrieken
Groenewoudseweg 1
NL-5621 BA Eindhoven(NL)**

(84) Benannte Vertragsstaaten:
**FR GB IT NL**

(72) Erfinder: **Brüggendieck, Siegfried
Peter Walterscheidtstrasse 19
W-6060 Berg. Gladbach(DE)**
Erfinder: **Schmitz, Hans-Joachim
Gartenstrasse 18
W-5014 Kerpen 3(DE)**

(74) Vertreter: **Koch, Ingo, Dr.-Ing. et al
Philips Patentverwaltung GmbH Wendenstrasse 35 Postfach 10 51 49
W-2000 Hamburg 1(DE)**

# Beschreibung

Die Erfindung bezieht sich auf ein Verfahren zur Herstellung eines optischen Kables, welches mindestens ein Schlauchelement mit einer extrudierten, durch Zugentlastungselemente verstärkten Schlauchhülle enthält, in welcher mindestens ein LWL eingebracht und durch Schrumpfung der Schlauchhülle mit Überlänge geführt ist.

Bei einem nach der GB-PS 15 68 546 bekannten derartigen Verfahren wird zunächst eine erste Hülle auf gestreckt geführte LWL aufgebracht. Danach wird eine zweite Hülle gemeinsam mit darin angeordneten Zugentlastungselementen aufextrudiert. Die bei der Abkühlung der zweiten Hülle enstehende Schrumpfung bewirkt, daß die lose in der ersten Hülle geführten LWL ausbuckeln und deshalb eine Überlänge gegenüber der fertigen zweischichtigen Schlauchhülle aufweisen. Beim Schrumpfvorgang buckeln auch die Zugentlastungselemente aus. Sie können wesentliche Zugkräfte erst dann aufnehmen, wenn sie bei einer Längung des Schlauchelements wieder eine gestreckte Lage erreicht haben. Bis dahin besteht jedoch schon die Gefahr, daß die LWL unzulässig mechanisch beansprucht werden.

Insbesondere bei nachfolgenden Fertigungsschritten wie beim Auftrommeln oder beim Verseilen von mehreren Schlauchelementen zu einem Bündelkabel, können bereits Brüche der LWL entstehen. Durch Dehnungen der Schlauchhülle kann die Überlänge der LWL unzulässig reduziert werden.

Der Erfindung liegt die Aufgabe zugrunde, bei einem Verfahren der eingangs genanntenn Art Brüche der LWL zu vermeiden und die Überlänge der LWL im ursprünglichen Ausmaß zu erhalten.

Die Lösung gelingt durch die im Anspruch 1 angegebenen Merkmale.

Erfindungsgemäß werden die Zugentlastungselemente erst dann in gestreckter Lage angebracht, wenn die LWL bereits durch Beendigung der Schrumpfung der aufextrudierten Schlauchhülle ihre Überlänge erreicht haben. Die Zugentlastungselemente müssen derart dimensioniert sein, daß die während weiterer Fertigungsvorgänge auftretende Zug- und Biegebelastungen auffangen können, bevor die LWL unzulässig beansprucht werden. Die gemäß der Erfindung vorzusehenden Zugentlastungselemente brauchen jedoch nicht so stark dimensioniert zu werden, daß sie auch betrieblichen mechanischen Beanspruchungen des optischen Kabels standhalten können.

Einfach herstellbare optische Kabel mit geringem Durchmesser ergeben sich vielmehr gemäß einer bevorzugten Ausführungsform durch die Verwendung von auf dem Schlauchelement nach dem Schrumpfvorgang aufgebrachten Zugentlastungselementen, deren Zugfestigkeit wesentlich kleiner als die für Aufnahme betrieblicher Belastungen erforderliche Zugfestigkeit ist.

Eine die Handhabung weiteren Fertigungsschritten erleichternde gute Biegbarkeit der mit LWL gefüllten Schlauchhüllen ergibt sich dadurch, daß ein einziges sich über einen kleinen Winkelbereich des Umfangs des Schlauchelements erstreckendes Zugentlastungselement verwendet wird. Es ist jedoch auch möglich, daß zwei sich diagonal gegenüberliegende und sich jeweils über einen kleinen Winkelbereich des Umfangs des Schlauchelements erstreckende Zugentlastungselemente verwendet werden. In beiden Fällen besteht eine praktisch unbehinderte Biegemöglichkeit in einer bestimmten Vorzugsrichtung.

Flache bandförmige Zugentlastungselemente können besonders einfach an die Oberfläche der Schlauchhülle geklebt werden. Dabei besteht die vorteilhafte Möglichkeit, daß zur Bildung einer Klebschicht linienförmige Oberflächenbereiche der Schlauchhülle erwärmt werden.

Insbesondere schnurförmige Zugentlastungselemente lassen sich bevorzugt dadurch anbringen, daß sie gemeinsam mit der Extrusion einer zweiten Hülle auf eine erste Schlauchhülle aufgebracht werden.

Die Erfindung wird anhand der Beschreibung von in der Zeichnung dargestellten vorteilhaften Ausführungsbeispielen näher erläutert.

Figur 1    zeigt einen Querschnitt durch ein optisches Kabel mit einem einzigen erfindungsgemäß hergestellten, durch zwei bandförmige Zugentlastungselemente verstärkten Schlauchelement.

Figur 2    zeigt einen Querschnitt durch ein erfindungsgemäß hergestelltes Schlauchelement mit einseitig angeklebten, schnurförmigen Zugentlastungselementen.

Figur 3    zeigt einen Querschnitt durch ein erfindungsgemäß hergestelltes Schlauchelement mit beidseitig gemeinsam mit einer zweiten aufextrudierten Hülle an eine erste Hülle angebrachten schnurförmigen Zugentlastungselementen.

Figur 4    zeigt in prinzipieller Darstellung eine Fertigungseinrichtung zur Herstellung eines Schlauchelements nach den Figuren 1 oder 2.

Figur 5    zeigt in prinzipieller Darstellung eine Fertigungseinrichtung zur Herstellung eines in Figur 3 dargestellen Schlauchelements.

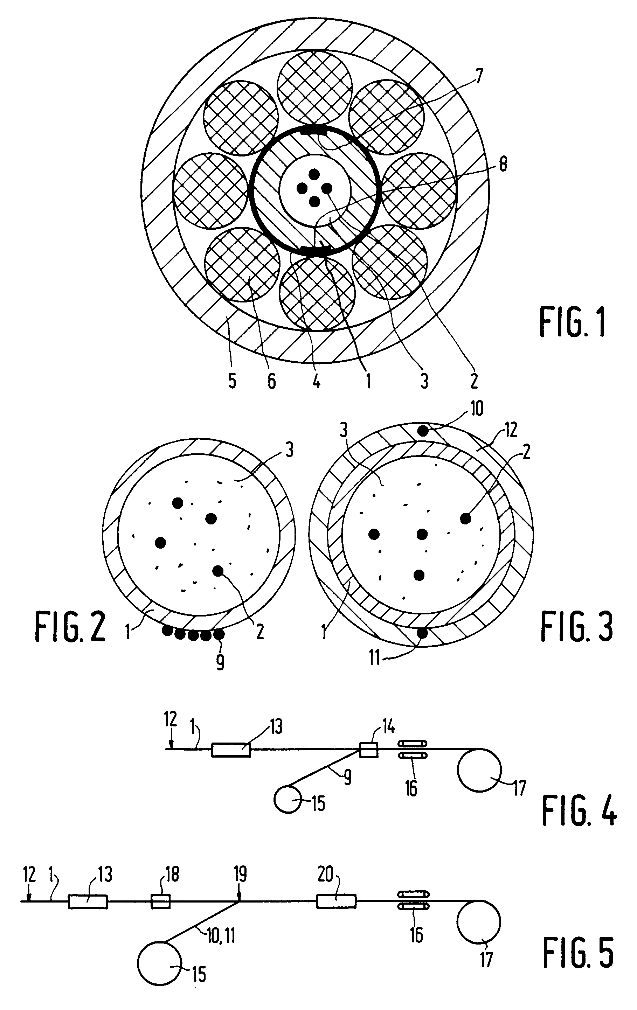

Gemäß der Ausführung nach Figur 1 sind in einer extrudierten Kunststoffhülle 1 Lichtleitfasern (LWL) 2 locker und mit Überlänge geführt. Der Freiraum zwischen der Hülle 1 und den LWL ist mit einer gelartigen Masse 3 gefüllt. Die Hülle 1 ist mit einem Quellvlies 4 bewickelt. Zwischen dem Außenmantel 5 und der Quellvliesbewicklung 4 sind starke Zugentlastungselemente 6 angeordnet, welche die betrieblich auf das Kabel einwirkenden Zugkräfte aufnehmen sollen. Zusätzlich sind erfindungsgemäß relativ schwache Zugentlastungselemente 7 und 8 vorgesehen, welche in angeschmolzene schmale Bereiche der Außenfläche der Hülle 1 eingedrückt sind. Diese schwachen Zugentlastungselemente 7 und 8 tragen nur unwesentlich zur Erhöhung der Zugfestigkeit des fertigen Kabels bei. Sie dienen lediglich dazu, die LWL bei der weiteren Verarbeitung des aus Hülle 1 und LWL 2 bestehenden Schlauchelements gegen bei der Fertigung auftretende Belastungen zu schützen. Das in Figur 1 dargestellte Schlauchelement kann leicht um eine in der Papierebene liegende vertikale Achse gebogen werden.

Alternative Ausführungsformen von Schlauchelementen sind in den Figuren 2 und 3 dargestellt.

In Figur 2 ist nur ein einziges, aus mehreren schnurförmigen Elementen bestehendes Zugentlastungselement vorgesehen. Es kann auf einem relativ großen Umfangswinkelbereich aufgebracht werden, ohne daß eine Biegung des Schlauchelements um eine in der Papierebene liegende horizontale Achse behindert wird. Die schnurförmigen, zugfesten und erforderlichenfalls auch stauchfesten Elemente 9 sind an die Außenfläche der Hülle 2 geklebt.

Bei der in Figur 3 erkennbaren Anordnung wurden schnurförmige Zugentlastungselemente 10 und 11 mit dem Extrudieren der zweiten Kunststoffhülle 12 an die Hülle 1 angebracht. Vor deren Anbringung muß die erste Hülle bereits geschrumpft und abgekühlt sein, so daß durch die zweite Hülle 10 keine die Hülle 1 kürzenden Schrumpfungen verursacht werden. Es empfiehlt sich dabei, solche Zugentlastungselemente 10 und 11 zu wählen, welche auch Stauchkräfte aufnehmen können.

Mit einer Anordnung nach Figur 4 können die in den Figuren 1 und 2 dargestellten Schlauchelemente hergestellt werden. Aus einem nicht dargestellten Extruder (Pfeil 12) gelangt die um die LWL 2 extrudierte Hülle 1 in eine Kühlvorrichtung 13. Dort schrumpft die Hülle 1 in Längsrichtung, so daß sie kürzer als die LWL 2 wird. Danach werden in einer geeigneten Vorrichtung 14 die von einer Vorratsrolle 15 abgezogenen Zugentlastungselemente 7 und 8 bzw. 9 an die Oberfläche der Hülle 1 geklebt. Derart erhaltene Schlauchelemente können ohne Gefährdung der LWL auch solchen Fertigungsvorgängen unterworfen werden, welche mechanische Belastungen durch Ziehen oder Biegen ausüben wie ein Raupenabzug 16 oder eine Trommel 17 zum Aufrollen des Schlauchelements.

Mit einer Einrichtung nach Figur 5 können insbesondere Schlauchelemente der in Figur 3 gezeigten Art hergestellt werden. Gegenüber Figur 4 sind zusätzlich eine Trocknungsvorrichtung 18 und an der Stelle 19 ein zweiter Extruder vorgesehen, in welchem bei der Extrusion einer zweiten Hülle 12 Zugentlastungselemente 10 und 11 mit einlaufen.

Nachfolgend wird die zweite Hülle 12 in der Kühleinrichtung 20 gekühlt. Das somit verfestigte Schlauchelement kann anschließend gefahrlos weiteren mechanisch beanspruchenden Fertigungsvorgängen ausgesetzt werden. Die ursprünglich bewirkte Überlänge der LWL gegenüber der umgebenden Schlauchhülle bleibt auch bei infolge der Weiterbearbeitung auftretenden Zugbelastungen erhalten.

**Patentansprüche**

1. Verfahren zur Herstellung eines optischen Kabels mit folgenden Verfahrensschritten:
   a) eine Schlauchhülle (1) wird um mindestens einen Lichtwellenleiter (2) mit einem Freiraum zwischen der Schlauchhülle (1) und dem (den) Lichtwellenleiter(n) (2) extrudiert,
   b) die Schlauchhülle (1) wird geschrumpft, so daß eine Überlänge des (der) Lichtwellenleiter (2) gegenüber der Schlauchhülle (1) entsteht,
   c) unmittelbar nach dem Schrumpfen der ohne Zugentlastungselemente extrudierten Schlauchhülle (1) wird vor weiteren, eine Biege- oder Zugbeanspruchung bewirkenden Arbeitsgängen mit der Außenseite der geschrumpften Schlauchhülle (1) mindestens ein Zugentlastungselement (7 bis 11) in gestreckter Lage verbunden.

2. Verfahren nach Anspruch 1, gekennzeichnet durch die Verwendung von auf dem Schlauchelement nach dem Schrumpfvorgang aufgebrachten Zugentlastungselementen, deren Zugfestigkeit wesentlich kleiner als die für die Aufnahme betrieblicher Belastungen erforderliche Zugfestigkeit ist.

3. Verfahren nach einem der Ansprüche 1 oder 2, dadurch gekennzeichnet, daß ein einziges, sich über einen kleinen Winkelbereich des Umfangs der Schlauchhülle (1) erstreckendes Zugentlastungselement (9) verwendet wird.

4. Verfahren nach einem der Ansprüche 1 bis 3, dadurch gekennzeichnet, daß zwei sich diagonal gegenüberliegende und sich jeweils über einen kleinen Winkelbereich des Umfangs der Schlauchhülle (1) erstreckende Zugentlastungselemente (7,8) bzw. (10,11) verwendet werden.

5. Verfahren nach einem der Ansprüche 1 bis 4, dadurch gekennzeichnet, daß bandförmige flache Zugentlastungselemente (7,8) verwendet werden.

6. Verfahren nach einem der Ansprüche 1 bis 4, dadurch gekennzeichnet, daß schnurförmige, gegebenenfalls auch stauchfeste Zugentlastungselemente (9,10,11) verwendet werden.

7. Verfahren nach einem der Ansprüche 1 bis 6, dadurch gekennzeichnet, daß die Zugentlastungselemente (7,8,9) an den Außenumfang der Schlauchhülle (1) geklebt werden.

8. Verfahren nach Anspruch 7, dadurch gekennzeichnet, daß zur Bildung einer Klebschicht linienförmige Oberflächenbereiche der Schlauchhülle (1) erwärmt werden.

9. Verfahren nach einem der Ansprüche 1 bis 6, dadurch gekennzeichnet, daß die zugfesten Elemente (10,11) gemeinsam mit der Extrusion einer zweiten Hülle (12) auf eine erste Schlauchhülle (1) aufgebracht werden.

## Claims

1. A method of manufacturing an optical cable, comprising the following production steps:
   a) a tubular sheath (1) is extruded around at least one optical waveguide (2) in such a manner that there is a free space between the tubular sheath (1) and the optical waveguide(s) (2),
   b) the tubular sheath (1) is caused to shrink, resulting in a length of the optical waveguide(s) (2) which is in excess of that of the tubular sheath (1),
   c) immediately after shrinking the tubular sheath (1), which has been extruded without strain-relief elements, and before carrying out further bending or tensile stress-inducing processes, at least one elongated strain-relief element (7 to 11) is connected to the outside of the shrunk tubular sheath (1).

2. A method as claimed in Claim 1, characterized by the use of strain-relief elements which are provided on the tubular element after the shrinking process, the tensile-stress resistance of said strain-relief elements being substantially lower than is required to take up loads occurring during operation.

3. A method as claimed in Claim 1 or 2, characterized in that a single strain-relief element (9) is used which occupies a small angular range along the circumference of the tubular sleeve (1).

4. A method as claimed in one of the Claims 1 to 3, characterized in that two strain-relief elements (7, 8) or (10, 11) are used which are disposed diagonally opposite each other and which each occupy a small angular range along the circumference of the tubular sheath (1).

5. A method as claimed in one of the Claims 1 to 4, characterized in that ribbon-shaped, flat strain-relief elements (7, 8) are used.

6. A method as claimed in one of the Claims 1 to 4, characterized in that cord-shaped, if necessary compression-resistant, strain-relief elements (9, 10, 11) are used.

7. A method as claimed in one of the Claims 1 to 6, characterized in that the strain-relief elements (7, 8, 9) are secured to the periphery of the tubular sheath (1) by means of an adhesive.

8. A method as claimed in Claim 7, characterized in that to form an adhesive layer, linear surface areas of the tubular sheath (1) are subjected to a thermal treatment.

9. A method as claimed in one of the Claims 1 to 6, characterized in that the provision of the tensile stress-resistant elements (10, 11) on a first tubular sheath (1) and the extrusion of a second sheath (12) on said tubular sheath take place concurrently.

## Revendications

1. Procédé de fabrication d'un câble optique comprenant les étapes suivantes:
   a) au moins une fibre optique (2) est entourée par extrusion d'une gaine de tuyau (1) en laissant un espace libre entre la gaine de tuyau (1) et la (les) fibre(s) optique(s) (2),
   b) le tuyau de gaine (1) est rétréci de façon à former une surlongueur de la (des) fibre(s) optique(s) (2) par rapport à la gaine de tuyau,
   c) immédiatement après le rétrécissement de la gaine de tuyau (1) extrudée sans éléments de soulagement de traction, au moins un élément de soulagement de traction (7 à 11) est relié en position allongée au côté extérieur de la gaine de tuyau rétrécie (1) avant des opérations ultérieures provoquant le travail à la flexion ou à la traction.

2. Procédé selon la revendication 1, caractérisé en ce qu'on utilise des éléments de soulagement de traction mis en place sur l'élément de tuyau après le procédé de rétrécissement et dont la résistance à la traction est essentiellement inférieure à la résistance à la traction nécessaire à l'absorption de charges se produisant dans les conditions d'exploitation.

3. Procédé selon l'une quelconque des revendications 1 ou 2, caractérisé en ce qu'on utilise un seul élément de soulagement de traction (9) s'étendant sur une petite zone angulaire de la périphérie de la gaine de tuyau (1).

4. Procédé selon l'une quelconque des revendications 1 à 3, caractérisé en ce qu'on utilise deux éléments de soulagement de traction (7, 8) ou (10, 11) diagonalement opposés et qui s'étendent chacun sur une petite zone angulaire de la périphérie de la gaine de tuyau (1).

5. Procédé selon l'une quelconque des revendications 1 à 4, caractérisé en ce qu'on utilise des éléments de soulagement de traction (7, 8) plats en forme de bande.

6. Procédé selon l'une quelconque des revendications 1 à 4, caractérisé en ce qu'on utilise des éléments de soulagement de traction (9, 10, 11) en forme de cordon, le cas échéant également résistants à l'écrasement.

7. Procédé selon l'une quelconque des revendications 1 à 6, caractérisé en ce que les éléments de soulagement de traction (7, 8, 9) sont collés à la périphérie extérieure de la gaine de tuyau (1).

8. Procédé selon la revendication 7, caractérisé en ce que des zones superficielles linéaires de la gaine de tuyau (1) sont chauffées pour former une couche adhésive.

9. Procédé selon l'une quelconque des revendications 1 à 6, caractérisé en ce que les éléments résistants à la traction (10, 11) sont mis en place sur une première gaine de tuyau (1) simultanément avec l'extrusion d'une deuxième gaine (12).

FIG. 1

FIG. 2

FIG. 3

FIG. 4

FIG. 5